# EUROPÄISCHE PATENTSCHRIFT

(11) **EP 2 597 742 B1**
(45) Veröffentlichungstag und Bekanntmachung des Hinweises auf die Patenterteilung: **20.04.2016**
(21) Anmeldenummer: 12306441.2
(22) Anmeldetag: 20.11.2012
(51) Int. Cl.: H02G 3/10

(54) **Geräteträger für die Montage eines Elektroinstallationsgerätes an einen Leitungsführungskanal**
Device holder for fitting an electrical installation device to a cable duct
Porte-appareils pour le montage d'un appareil d'installation électrique sur un canal de guidage de conduites

(30) Priorität: 25.11.2011 DE 202011108285 U
(43) Veröffentlichungstag der Anmeldung: 29.05.2013
(73) Patentinhaber: Tehalit GmbH, 67716 Heltersberg (DE)
(72) Erfinder: Eberle, Patrick, 66292 Riegelsberg (DE); Speiser, Mathias, 67718 Schmalenberg (DE)
(74) Vertreter: Nuss, Laurent

(56) Entgegenhaltungen:
- EP-A1- 0 921 617
- DE-A1- 4 103 957
- US-A1- 2009 163 074

## Beschreibung

Die vorliegende Erfindung betrifft einen Geräteträger für die Montage eines Elektroinstallationsgerätes an einen Leitungsführungskanal.

Geräteträger dienen der Aufnahme eines Elektroinstallationsgerätes und werden an einen Leitungsführungskanal, beispielsweise einen Sockelleistenkanal, montiert. Solche Geräteträger sind beispielsweise in der DE 202 13 032 U1, DE 201 20 026 U1 oder EP 1 320 161 A1 beschrieben. Elektroinstallationsgeräte werden an den Geräteträgern unterschiedlich befestigt. Beispielsweise kann die Befestigung über Dome oder durch Verschraubung erfolgen. Ferner sind auch Rastverschlüsse zur Befestigung des Elektroinstallationsgerätes an den Geräteträger bekannt.

In der EP 1 394 916 A1 wird ein Geräteträger für Sockelleistenkanäle beschrieben, der eine Bodenplatte mit Befestigungsöffnungen und Rasthaken für eine Schnappbefestigung eines Elektroinstallationsgerätes besitzt. Jeder Rasthaken ist an einen Biegearm angeformt. Die Biegearme sind wiederum an der Bodenplatte ausgebildet und radial orientiert. Dadurch sitzt das Elektroinstallationsgerät umso fester in den Rasthaken, je höher die Abzugskraft am Elektroinstallationsgerät ist.

In der DE 20 2009 009 353 U1 wird ein selbsttragender Geräteträger für die Montage von Elektroinstallationsgeräten in Leitungsführungskanälen beschrieben. Der Geräteträger besteht aus einem Basisteil, bestehend aus einem Halterahmen und Klemmfüßen zur Aufnahme und Befestigung eines oder mehrerer Elektroinstallationsgeräte. Eine Schürze mit Rastelementen dient zur Befestigung des Basisteils an einem Kanalunterteil eines Leitungsführungskanals.

Die DE 4103957 offenbart einen Geräteträger nach dem Oberbegriff des Anspruch 1.

Bei vielen bekannten Geräteträgerlösungen ist die Montage recht aufwändig oder es ist Werkzeug für die Anbringung und Befestigung des Elektroinstallationsgerätes an dem Geräteträger erforderlich. Oftmals muss das Elektroinstallationsgerät zusätzlich verschraubt werden, um einen festen Halt an dem Geräteträger sicherzustellen. Dies ist unbefriedigend.

Vor diesem Hintergrund ist es Aufgabe der vorliegenden Erfindung, einen alternativen Geräteträger anzugeben, der eine erleichterte Montage ohne Werkzeug ermöglicht.

Diese Aufgabe wird gelöst durch einen Geräteträger mit den Merkmalen des Anspruchs 1.

Der erfindungsgemäße Geräteträger besteht aus einem Basisteil zur Aufnahme eines Elektroinstallationsgerätes, das aus einem Boden, Seitenteilen und Montagesäulen besteht. Ferner ist wenigstens ein Verschlusselement für eine Schnellverschlussbefestigung des Elektroinstallationsgerätes oder eine Montageteils davon an dem Basisteil des Geräteträgers vorgesehen. Das Verschlusselement besteht aus einer Grundplatte, darüber angeordneten Führungszungen sowie einer Rückleiste, die mit der Grundplatte einen Führungsschlitz zur Aufnahme des Elektroinstallationsgerätes oder eines Montageteils davon definieren. In den Führungsschlitz wird das Elektroinstallationsgerät bzw. das Montageteil davon eingesetzt und mit dem Geräteträger verklemmt. Dies kann durch den Monteur mit einer Hand erfolgen, zusätzliches Montagewerkzeug ist nicht erforderlich. Dadurch wird die Montage erheblich erleichtert.

Für die Befestigung der Verschlusselemente an dem Basisteil sind an der Unterseite der Grundplatte des Verschlusselementes ein oder mehrere Befestigungsstifte ausgebildet, die im Montagezustand in am Kopfende ausgebildete Öffnungen der Montagesäulen greifen und das Verschlusselement dadurch an dem Basisteil des Geräteträgers fixieren. Vorzugsweise sind an der Unterseite der Grundplatte des Verschlusselementes zwei Befestigungsstifte angeformt, deren Abstand dem seitlichen Abstand der Öffnungen der Montagesäulen entspricht.

Das Basisteil selbst ist vorzugsweise quadratisch bis rechteckig ausgebildet, und es sind vorzugsweise vier Montagesäulen gegenüberliegend zueinander angeordnet. Vorzugsweise werden zwei separate Verschlusselemente parallel zueinander gegenüberliegend auf jeweils zwei beabstandete Montagesäulen aufgesteckt. Durch die Verwendung separater Verschlusselemente und die dadurch bewirkte Befestigung an den Montagesäulen des Basisteils ist eine rasche Montagemöglichkeit für das Elektroinstallationsgerät gegeben, ohne dass eine zusätzliche Verschraubung oder der Einsatz sonstiger Befestigungsmittel notwendig ist.

Die jeweils beiden Montagesäulen, in denen das Verschlusselement eingesteckt wird, sind vorzugsweise über eine Zwischenwand miteinander verbunden und dadurch zusätzlich verstärkt.

Zur Bildung des Führungsschlitzes sind die seitlichen Führungszungen an der Rückleiste des Verschlusselementes nach innen gebogen.

Falls bei der Montage dennoch eine zusätzliche Verschraubung erwünscht sein sollte, ist vorzugsweise neben jeder Montagesäule eine zusätzliche Befestigungssäule zur Verschraubung des Einbauteils an den Geräteträger ausgebildet, wodurch das Elektroinstallationsgerät oder das Montageteil davon zusätzlich fixiert werden kann.

An der Grundplatte befinden sich vorzugsweise Befestigungsschlitze für die Aufnahme der Befestigungssäulen beim Aufstecken der Verschlusselemente auf die Montagesäulen.

Vorzugsweise eignet sich der erfindungsgemäße Geräteträger für einen frontrastenden Geräteeinbau. Jedoch ist er auch für jede andere Art von Kabelkanal geeignet. Je nach Anwendungsart kann an dem Basisteil zusätzlich eine Schürze ausgebildet sein, die für die Befestigung des Geräteträgers an dem Kanalunterteil genutzt werden kann.

Die Erfindung wird in den nachfolgenden Zeiclnungen näher erläutert. Es zeigen

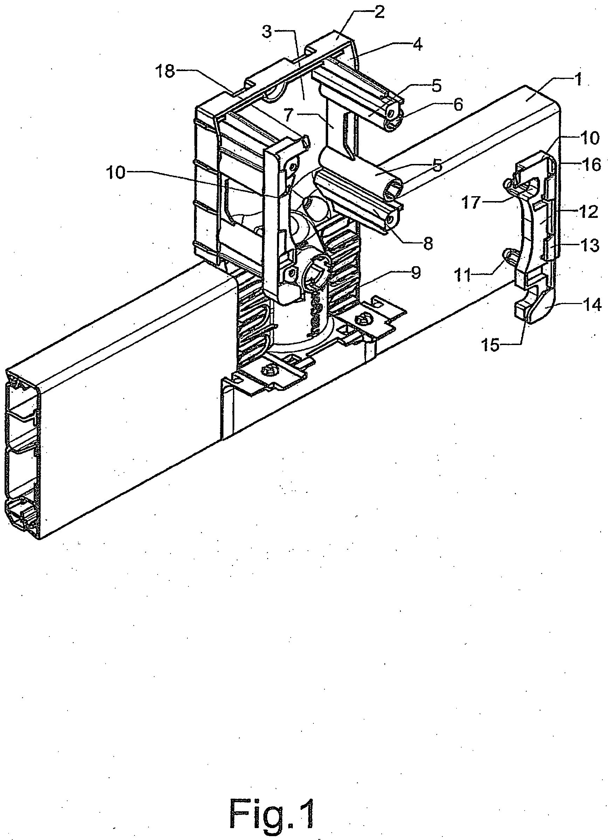

Fig. 1 bis 4 : isometrische Darstellungen eines Montageablaufs des Geräteträgers mit zwei Verschlusselementen.

In Fig. 1 ist ein Kabelkanal 1 gezeigt, bei dem der erfindungsgemäße Geräteträger über eine Schürze 9 befestigt ist. Der Geräteträger besteht aus einem Basisteil 2. mit einem Boden 3, Seitenwänden 4 sowie vier senkrecht an dem Boden 3 angeformten Montagesäulen 5. Jeweils zwei Montagesäulen 5 dienen zum Aufstecken der beiden separaten Verschlusselemente 10. Die beiden Montagesäulen 5 für die Verschlusselemente 10 sind über eine Zwischenwand 7 seitlich zusätzlich verstärkt.

Das Verschlusselement 10 besteht aus einer Grundplatte 12, einer Rückleiste 16 sowie an der Rückleiste 16 ausgeformten und nach innen gebogenen Führungszungen 13, 14. Die Führungszungen 13, 14 bilden mit der Grundplatte 12 einen Führungsschlitz 15 zur Aufnahme der Ränder des Elektroinstallationsgerätes bzw. des Montageteils davon. An der Unterseite der Grundplatte 12 sind zwei Befestigungsstifte 11 ausgebildet. Diese greifen in die jeweiligen Öffnungen 6 der Montagesäulen 5.

Neben den Montagesäulen 5 befinden sich zusätzliche Schraubsäulen 8, mit denen das Verschlusselement 10 über einen Befestigungsschlitz 17 zusätzlich befestigt werden kann, beispielsweise durch Verschrauben, falls dies in besonderen Montagesituationen erwünscht sein sollte.

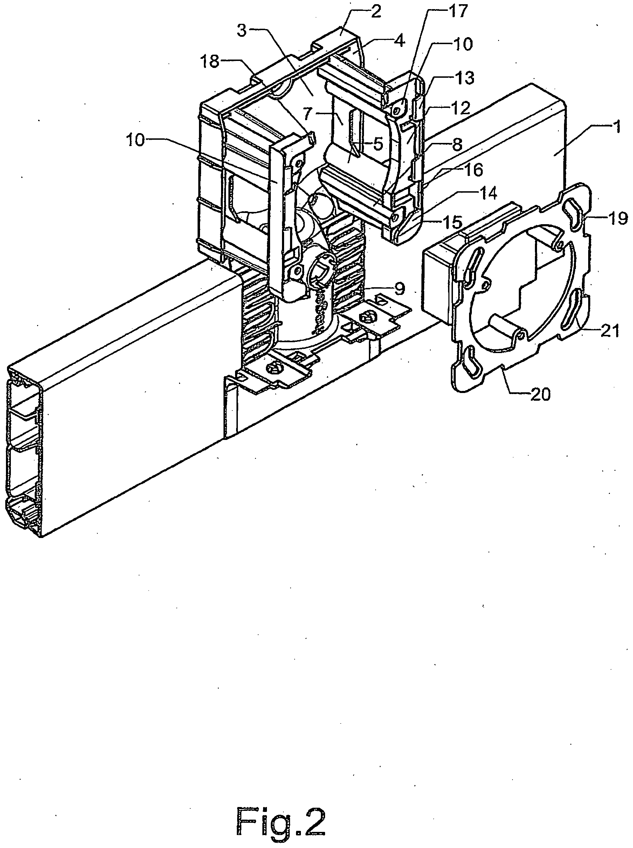

In Fig. 2 sind beide Verschlusselemente 10 auf die Montagesäulen 5 aufgesteckt.

Das Montageteil 20 wird auf die Verschlusselemente 10 geklemmt, indem es zunächst von oben auf die Verschlusselemente 10 eingesetzt und dann in den Führungsschlitz 15 nach unten gedrückt wird. Beim Einsetzen greifen die Führungszungen 13 in die entsprechenden Aussparungen 19 des Montageteils 20. Beim Herunterschieben sorgen die Führungszungen 13, 14 für den Halt des Montageteils 20 an den Verschlusselementen 10.

Ferner sind an den Verschlusselementen 10 Federzungen 18 zu erkennen, die ein Herausfallen des Montageteils 20 verhindern sollen. Die Federzungen 18 drücken entsprechend ihrer Federkraft nach oben und bewirken, dass das Montageteil 20 mit seiner Montageplatte genen die Führungszungen 13, 14 gedrückt wird. Zum Entfernen des Geräteträger werden die Federzungen 18 nach unten gedrückt. Das Montageteil 20 wird freigegeben, kann nach oben geschoben und aus den Verschlusselementen 10 herausgenommen werden.

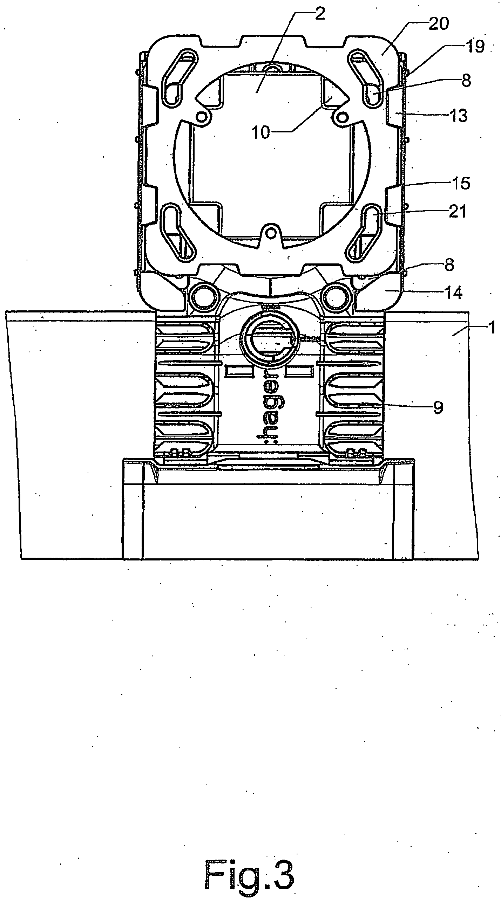

In Fig. 3 ist die Montagesituation des erfindungsgemäßen Geräteträgers von oben gezeigt. Auf den Verschlusselementen 10 ist das Elektroinstallationsgerät bzw. das Montageteil 20 davon in den Führungsschlitz 15 eingesteckt.

Das Montageteil 20 ist auf den Verschlusselementen 10 eingesetzt. Die Führungszungen 13 befinden sich in den Aussparungen 19 des Montageteils 20. Zur endgültigen Fixierung wird das Montageteil 20 nach unten über die Führungszungen 13 geschoben. Die zusätzlichen Führungszungen 14 sorgen für weiteren Halt.

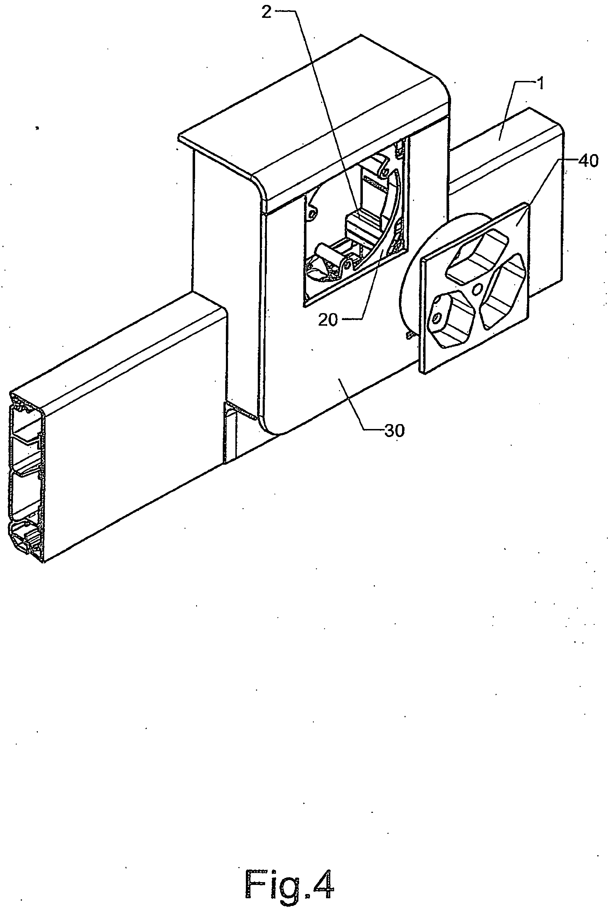

In Fig. 4 ist der endgültige Montagezustand gezeigt. Der Geräteträger wird über ein Gehäuse 30 abgedeckt und schließlich eine Buchsenkombination 40 auf das Montageteil 20 eingesteckt.

Die erfindungsgemäßen Verschlusselemente zeichnen sich Dadurch aus, dass bei der Montage des Geräteträgers an einen Leitungsführungskanal kein Werkzeug erforderlich ist. Ferner ist die Montage rasch und einfach durchführbar.

## Patentansprüche

1. Geräteträger für die Montage eines Elektroinstallationsgerätes an einen Leitungsführungskanal, umfassend:
- ein Basisteil (2) zur Aufnahme des Elektroinstallationsgerätes, bestehend aus einem Boden (3), Seitenteilen (4) und Montagesäulen (5),
- wenigstens ein Verschlusselement (10) zur Schnellverschlussbefestigung des Elektroinstallationsgerätes oder eines Montageteils davon (20) an dem Basisteil (2) des Geräteträgers,
**dadurch gekennzeichnet, dass** das wenigstens eine Verschlusselement (10) aus einer Grundplatte (12), darüber angeordneten Führungszungen (13, 14) sowie einer Rückleiste (16) besteht, die mit der Grundplatte (12) einen Führungsschlitz (15) zur Aufnahme des Elektroninstallationsgerätes oder eines Montageteiles (20) davon definieren, wobei an der Unterseite der Grundplatte (12) des Verschlusselementes (10) Befestigungsstifte (11) ausgebildet sind, die im Montagezustand in Öffnungen (6) der Montagesäulen (5) greifen und das Verschlusselement (10) dadurch an dem Basisteil (2) fixieren.

2. Geräteträger nach Anspruch 1, **dadurch gekennzeichnet, dass** zwei separate Verschlusselemente (10) an zwei gegenüberliegenden Montagesäulen (5) des Basisteils (2) befestigt sind.

3. Geräteträger nach Anspruch 1 oder 2, **dadurch gekennzeichnet, dass** die Montagesäulen (5) des Basisteils (2) über eine Zwischenwand (7) verstärkt sind.

4. Geräteträger nach einem der vorhergehenden Ansprüche, **dadurch gekennzeichnet, dass** die seitlichen Führungszungen (13) an der Rückleiste (16) des Verschlusselementes (10) nach innen gebogen sind.

5. Geräteträger nach einem der vorhergehenden Ansprüche, **dadurch gekennzeichnet, dass** neben jeder Montagesäule (5) eine zusätzliche Befestigungssäule (8) zur Verschraubung angeordnet ist.

6. Geräteträger nach Anspruch 5, **dadurch gekennzeichnet, dass** an der Grundplatte (12) Befestigungsschlitze (17) für die Aufnahme der Befestigungssäulen (8) ausgeformt sind.

7. Geräteträger nach einem der vorhergehenden Ansprüche, **dadurch gekennzeichnet, dass** an der Unterseite der Grundplatte (12) des Verschlusselementes (10) zwei Befestigungsstifte (11) angeformt sind, deren Abstand dem seitlichen Abstand der Öffnungen (6) der Montagesäulen (5) entspricht.

8. Geräteträger nach einem der vorhergehenden Ansprüche, **dadurch gekennzeichnet, dass** an der Unterseite des Basisteils (2) eine Schürze (9) zur Befestigung an ein Kanalunterteil (1) ausgebildet ist.

9. Geräteträger nach einem der vorhergehenden Ansprüche, **dadurch gekennzeichnet, dass** am Elektroinstallationsgerät oder am Montageteil (20) Ausnehmungen (19) vorgesehen sind, die zur Aufnahme der Führungszungen (13) der Verschlusselemente (10) dienen.

10. Geräteträger nach einem der vorhergehenden Ansprüche, **dadurch gekennzeichnet, dass** an den Stirnseiten der Grundplatte (12) der Verschlusselemente (10) Federzungen (18) ausgebildet sind.

## Claims

1. Device support for fitting an electrical installation device to a line guidance duct, comprising:
- a base part (2) for receiving the electrical installation device, comprising a base (3), side parts (4) and mounting columns (5),
- at least one closure element (10) for quick-action closure fastening of the electrical installation device or a mounting part (20) thereof to the base part (2) of the device support,
**characterized in that** the at least one closure element (10) consists in a base plate (12), guidance tongues (13, 14) which are arranged above the said base plate and also a backing strip (16) which, together with the base plate (12), define a guidance slot (15) for receiving the electrical installation device or a mounting part (20) thereof, wherein fastening pins (11) are formed on the bottom face of the base plate (12) of the closure element (10) and, in the fitted state, extend into openings (6) in the mounting columns (5) and thereby fix the closure element (10) to the base part (2).

2. Device support according to Claim 1, **characterized in that** two separate closure elements (10) are fastened to two opposite mounting columns (5) of the base part (2).

3. Device support according to Claim 1 or 2, **characterized in that** the mounting columns (5) of the base part (2) are reinforced by means of an intermediate wall (7).

4. Device support according to one of the preceding claims, **characterized in that** the lateral guidance tongues (13) on the backing strip (16) of the closure element (10) are bent inwards.

5. Device support according to one of the preceding claims, **characterized in that** an additional fastening column (8) for screw connection is arranged next to each mounting column (5).

6. Device support according to Claim 5, **characterized in that** fastening slots (17) for receiving the fastening columns (8) are formed on the base plate (12).

7. Device support according to one of the preceding claims, **characterized in that** two fastening pins (11) are integrally formed on the bottom face of the base plate (12) of the closure element (10), the distance between the said fastening pins corresponding to the lateral distance between the openings (6) in the mounting columns (5).

8. Device support according to one of the preceding claims, **characterized in that** a skirt (9) for fastening to a duct lower part (1) is formed on the bottom face of the base part (2).

9. Device support according to one of the preceding claims, **characterized in that** recesses (19) which serve to receive the guidance tongues (13) of the closure elements (10) are provided on the electrical installation device or on the mounting part (20).

10. Device support according to one of the preceding claims, **characterized in that** spring tongues (18) are formed on the end faces of the base plate (12) of the closure elements (10).

## Revendications

1. Support d'appareil pour le montage d'un appareil d'installation électrique sur un caniveau de câblage, comprenant :
- une partie de base (2) pour recevoir l'appareil d'installation électrique, constituée d'un fond (3), de parties latérales (4) et de colonnes de montage (5),
- au moins un élément de fermeture (10) pour la fixation à fermeture rapide de l'appareil d'installation électrique ou d'une partie de montage (20) de ce dernier sur la partie de base (2) du support d'appareil,
**caractérisé en ce que** l'élément de fermeture au moins unique (10) est constitué d'une plaque de base (12), de languettes de guidage (13, 14) disposées au-dessus de cette plaque et d'une barrette arrière (16), qui définissent avec la plaque de base (12) une fente de guidage (15) pour recevoir l'appareil d'installation électrique ou une partie de montage (20) de ce dernier, des broches de fixation (11) étant formées sur le dessous de la plaque de base (12) de l'élément de fermeture (10), qui s'engagent dans l'état de montage dans des ouvertures (6) des colonnes de montage (5) et fixent ainsi l'élément de fermeture (10) en position sur la partie de base (2).

2. Support d'appareil selon la revendication 1, **caractérisé en ce que** deux éléments de fermeture séparés (10) sont fixés sur deux colonnes de montage opposées (5) de la partie de base (2).

3. Support d'appareil selon la revendication 1 ou 2, **caractérisé en ce que** les colonnes de montage (5) de la partie de base (2) sont renforcées au moyen d'une paroi intermédiaire (7).

4. Support d'appareil selon l'une des revendications précédentes, **caractérisé en ce que** les languettes de guidage latérales (13) sur la barrette arrière (16) de l'élément de fermeture (10) sont courbées vers l'intérieur.

5. Support d'appareil selon l'une des revendications précédentes, **caractérisé en ce qu'**une colonne de fixation supplémentaire (8) est disposée à côté de chaque colonne de montage (5) pour l'assemblage vissé.

6. Support d'appareil selon la revendication 5, **caractérisé en ce que** des fentes de fixation (17) sont formées sur la plaque de base (12) pour recevoir les colonnes de fixation (8).

7. Support d'appareil selon l'une des revendications précédentes, **caractérisé en ce que** deux broches de fixation (11) sont formées sur le dessous de la plaque de base (12) de l'élément de fermeture (10), dont l'espacement correspond à l'espacement latéral des ouvertures (6) des colonnes de montage (5).

8. Support d'appareil selon l'une des revendications précédentes, **caractérisé en ce qu'**un tablier (9) pour la fixation sur une partie inférieure de caniveau (1) est formé sur le dessous de la partie de base (2).

9. Support d'appareil selon l'une des revendications précédentes, **caractérisé en ce que** des évidements (19) sont prévus sur l'appareil d'installation électrique ou sur la partie de montage (20), qui servent à recevoir les languettes de guidage (13) des éléments de fermeture (10).

10. Support d'appareil selon l'une des revendications précédentes, **caractérisé en ce que** des languettes élastiques (18) sont formées sur les côtés frontaux de la plaque de base (12) des éléments de fermeture (10).
